# EUROPEAN PATENT SPECIFICATION

(11) **EP 3 191 673 B1**
(45) Date of publication and mention of the grant of the patent: **11.12.2019**
(21) Application number: 15775493.8
(22) Date of filing: 24.08.2015
(51) Int. Cl.: E06B 7/02, E06B 7/10, E06B 7/14, F24F 12/00

(54) **VENTILATION WINDOW**
LÜFTUNGSFENSTER
FENÊTRE DE VENTILATION

(30) Priority: 05.09.2014 FI 20145781
(43) Date of publication of application: 19.07.2017
(73) Proprietor: Skaala IFN Oy, 62375 Ylihärmä (FI)
(72) Inventor: HÄNNINEN, Petri, 60510 Hyllykallio (FI); JASKARI, Jyrki, 66430 Vedenoja (FI)
(74) Representative: Genip Oy
(86) International application number: PCT/IB2015/056401
(87) International publication number: WO 2016/034981

(56) References cited:
- EP-A1- 1 795 691
- WO-A1-97/39289
- WO-A1-2011/105969
- GB-A- 2 138 124

## Description

### Field of invention

The invention is related to the field of building and ventilation technology, more specifically to ventilation windows.

### Technical background

IFN-Holding AG's European patent application publication EP 2 594 725 A2 describes a window with a ventilation unit. The air inlet openings of the window are in the frame or in the sash. Inlet air travels in a duct made in the frame or in the sash. A heat exchanger possibly included in the ventilation window has been placed in a recess made inside the body structure on the outside of the frame.

Further windows with ventilation units are known from international patent applications published under publication number WO 2011/105969 A1 and WO 97/39289 A1, as well as from UK patent application published under publication number GB 2 138 124 A mentioning in its window frame an additional outlet provided for condensation liable to drain from a hot pass of its heat exchanger. Also European patent application publication EP 1 795 691 A1 describes a window with a ventilation unit.

### Objective of invention

The objective of the invention is to improve handling of condensation water. This particular objective can be solved by means of a ventilation window according to independent claim 1. The dependent claims describe the preferred aspects of the ventilation window.

### Advantages of invention

The ventilation window comprises a) a frame, b) at least one glass element located on the inside of a perimeter formed by the frame, and c) a ventilation device which has been installed or is installable in an installation housing inside the frame from the vertical side on the interior side and which is equipped with an elongated heat exchanger. The heat exchanger is preferably a counter flow heat exchanger, a cross flow heat exchanger or a heat exchanger with a rotating cell.

Furthermore, the ventilation window comprises i) at least one blower-operated fresh air duct for leading fresh air from the exterior to the ventilation device through at least one inlet such as an orifice or nozzle located in the frame on the exterior side and from the ventilation device further to the interior as inlet air through at least one outlet such as an orifice or nozzle located in the frame on the interior side, and ii) at least one blower-operated exhaust air duct for leading exhaust air from the interior to the ventilation device through at least one inlet such as an orifice or nozzle located in the frame on the interior side and from the ventilation device further to the exterior as waste air through at least one outlet such as an orifice or nozzle located in the frame on the exterior side.

The fresh air duct runs over the entire distance between the inlet and outlet and the exhaust air duct runs over the entire distance between the inlet and outlet inside the ventilation device and furthermore so that the fresh air duct and the exhaust air duct intersect in the heat exchanger. In a prototype manufactured by the applicant, the length of an elongated counter flow heat exchanger is 45.5 cm, cross-sectional area is 60 cm² and the cross-sectional area of both the fresh air duct and the exhaust air duct is 20 cm². The elongated shape of the heat exchanger enables a good temperature efficiency and at the same time reduces or even completely eliminates the need for the post-heating of inlet air. On the other hand, the elongation of the heat exchanger increases the freezing risk of condensation water in a situation where the temperature of fresh air decreases below the freezing point of water. In other words, the length of the heat exchanger is a compromise between the two conditions mentioned above. In practice, the available space and the size of the frame also set the limits for the suitable sizes.

As compared to the window described in IFN-Holding AG's European patent application publication EP 2 594 725 A2, the installation of the ventilation device now discussed, integrated into a ventilation window, is facilitated, because no separate recess of the installation opening of the window needs to be made in the body structure for the heat exchanger. In this case, it is possible to achieve considerable savings in labour and material, especially in renovated buildings.

As compared to the window described in IFN-Holding AG's European patent application publication EP 2 594 725 A2, it is possible to improve the serviceability of the ventilation device now discussed, integrated into a ventilation window. This is so because now it is not necessary to break the body structure or the coating of the inner wall from the outside of the frame for example when servicing the heat exchanger or the blower, and furthermore, it is not necessary to break (for example chisel) for this purpose the possible fastening of the window to the body structure in order to remove the frame from the body structure.

As compared to the window described in IFN-Holding AG's European patent application publication EP 2 594 725 A2, it is possible to simplify the manufacture of the frame of the ventilation device now discussed, because it is not necessary to build complicated air leading ducts in the frame, which is most commonly made of for example wood or profiled metal or plastic (for example of hollow profiled aluminium, which can most preferably be manufactured as an extrusion), when both the fresh air duct and the exhaust air duct run over the entire distance between the inlet and outlet inside the ventilation device. In this way, it is possible to improve the tightness of the ventilation window and ventilation device and of the interfaces between them.

It is possible to increase the volume flow produced by the blower-operated fresh air duct and by the blower-operated exhaust air duct as compared to a situation where the ventilation window would have been implemented with natural ventilation. Blower here or in what follows means an axial lower or centrifugal blower.

The ventilation window further comprises in the flow direction to the exhaust air duct an outlet duct, which is in a drain connection to the exterior, after the duct of the counter flow heat exchanger for removing condensation water, it is possible to lead condensation water to the exterior. In this way, it is possible to avoid the collection of condensation water into a separate vessel or tank. Moreover, in this way it is not necessary to bring condensation water to the interior, as a result of which it is possible to avoid the need for a separate drain connection of the ventilation window.

When the outlet duct of the ventilation window comprises an outlet tube, and most preferably also a guide, such as a trough, inclined guide surfaces and/or a funnel, arranged to guide condensation water from the mouth of the duct of the heat exchanger to the direction of the internal mouth of the outlet tube, the controlled guiding away of condensation water from the ventilation window is possible. By choosing a suitable length of the outlet tube, it is possible to guide condensation water in a controlled manner to a desired distance from the surface of the external wall.

Most preferably in connection with the outlet duct there is an arrangement for keeping condensation water melted, such as a trace heating cable installed in the outlet tube and possibly also in the guide, trough, inclined guide surfaces and/or funnel, which arrangement most preferably is of or contains self-adjusting heating cable, the resistance of which is proportional to the temperature. By means of the arrangement for keeping condensation water melted, it is also possible to use the ventilation window in the winter, when the freezing of condensation water might disturb the functioning of the ventilation device. By means of a self-adjusting heating cable, it is possible to implement the control of the arrangement for keeping condensation water melted technically in a very simple manner and even without a separate control logic.

When an additional frame is installed to the side of the frame on the side of the ventilation device, to the outside of the perimeter formed by the frame, the frame and the additional frame together form a structure to which it is possible to make an installation housing for the embedding of the ventilation device.

When the ventilation device is so symmetrically designed that it is possible to install the ventilation device or so that the ventilation device is installable either to the left or right vertical frame of the ventilation window, it is possible to install the same ventilation device both to a right-handed and a left-handed ventilation window.

### List of drawings

In what follows, the ventilation window is presented in more detail by means of the exemplary embodiments shown in the enclosed drawings FIG 1 - FIG 15. Of the drawings:
- FIG 1: shows a perspective view from the interior of a ventilation window to which a ventilation machine has been installed;
- FIG 2: shows a perspective view from the exterior of a ventilation window to which a ventilation machine has been installed;
- FIG 3: shows a ventilation window viewed from the interior directly from the front;
- FIG 4: shows a ventilation window viewed from the exterior directly from the front;
- FIG 5: shows a horizontal section V - V of the ventilation window shown in FIG 1;
- FIG 6: shows a perspective view of the electric system;
- FIG 7: shows the ventilation device viewed from the direction of the ducts on the exterior side;
- FIG 8: shows a horizontal section VIII-VIII of the ventilation device shown in FIG 7;
- FIG 9: shows a vertical section IX-IX of the ventilation device shown in FIG 7;
- FIG 10: shows a vertical section X-X of the ventilation device shown in FIG 7;
- FIG 11: shows a vertical section XI-XI of the ventilation device shown in FIG 10;
- FIG 12: shows a vertical section XII-XII of the ventilation device shown in FIG 10;
- FIG 13: shows an exploded figure of the ventilation window viewed from the direction of the cover plate from the left diagonally from the top;
- FIG 14: shows an exploded figure of the ventilation window viewed from the direction of the back plate from the left diagonally from the top; and
- FIG 15: shows a perspective view of an example of the implementation of the sound insulation of longitudinal transmission ducts;

The same reference numbers refer to the same technical characteristics in all drawings.

### Detailed description of the invention

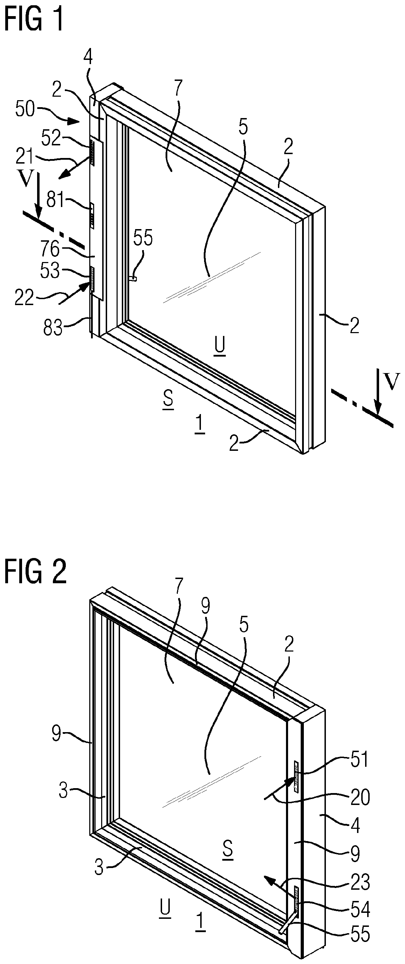

FIG 1 and FIG 2 show a perspective view of a ventilation window 1, to which a ventilation device 50 has been installed.

The ventilation window 1 comprises a frame 2 and at least one glass element 5 located on the inside of a perimeter formed by the frame 2 so that the glass element 5 or a part of it forms a light opening area 7. In addition to this, the ventilation window 1 comprises a ventilation device 50 which has been installed or is installable in an installation housing 14 inside the frame 2 from the vertical side on the interior S side and which is equipped with an elongated counter flow heat exchanger 62.

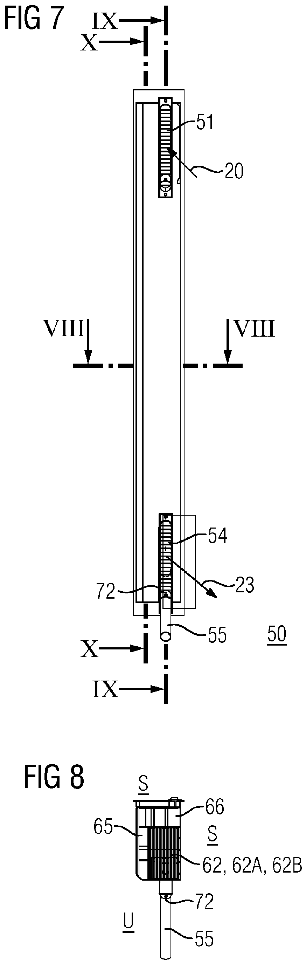

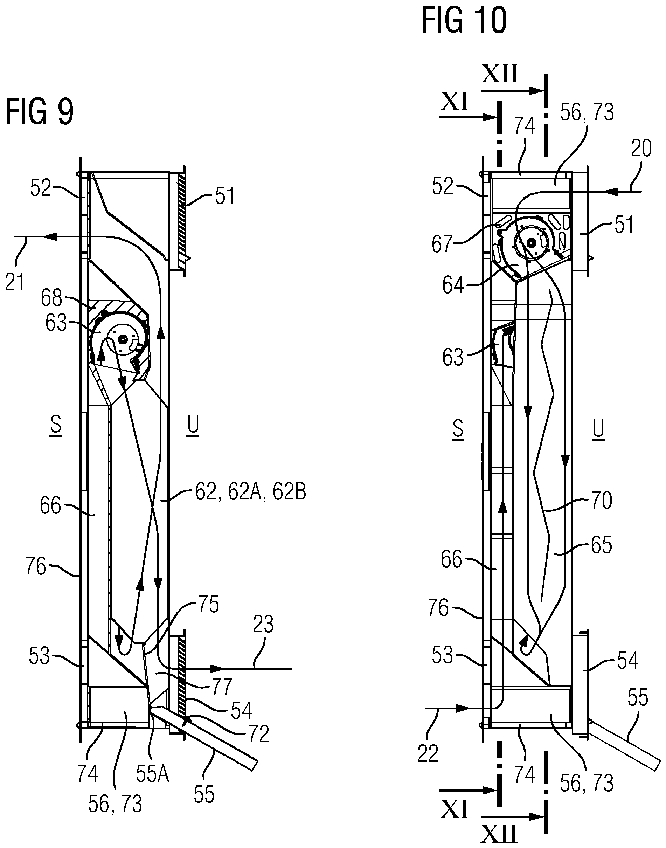

The structure and functioning of the ventilation device 50 are presented in more detail below in connection with FIG 7-14. The structure and functioning of a fresh air duct and an exhaust air duct are illustrated in FIG 9 and 10.

The ventilation window 1 further comprises at least one blower-operated fresh air duct 65, 62A for leading fresh air 20 from the exterior U to the ventilation device 50 through at least one inlet 51 such as an orifice or nozzle located in the frame 2 on the exterior U side and from the ventilation device 50 further to the interior S as inlet air 21 through at least one outlet 52 such as an orifice or nozzle located in the frame 2 on the interior S side, and at least one blower-operated exhaust air duct 66, 62B for leading exhaust air 22 from the interior S to the ventilation device 50 through at least one inlet 53 such as an orifice or nozzle located in the frame 2 on the interior S side and from the ventilation device 50 further to the exterior U as waste air 23 through at least one outlet 54 such as an orifice or nozzle located in the frame 2 on the exterior U side.

The fresh air duct 65, 62A of the ventilation device 50 runs over the entire distance between the inlet 51 and outlet 52 and the exhaust air duct 66, 62B runs over the entire distance between the inlet 53 and outlet 54 inside the ventilation device 50 and furthermore so that the fresh air duct 65, 62A and the exhaust air duct 66, 62B intersect in the counter flow heat exchanger 62.

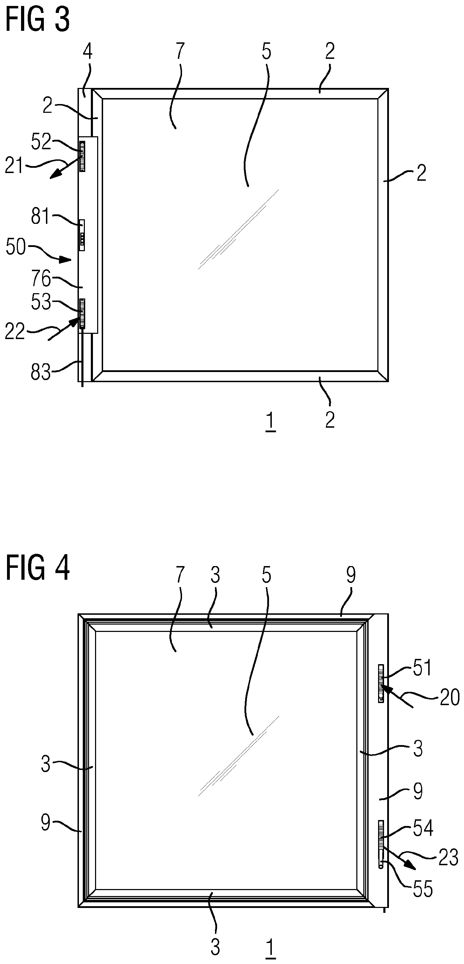

FIG 3 and FIG 4 show the ventilation window 1 directly from the front from the interior and directly from the front from the exterior.

The ventilation device 50 remains inside the frame 2 and an additional frame 4. The additional frame 4 is installed to the side of the frame 2 on the side of the ventilation device 50, to the outside of the perimeter formed by the frame 2. The light opening area 7 of the ventilation window 1 does not essentially change in relation to the light opening area 7 as compared to a ventilation window 1 where there is no ventilation device 50 installed. At least one window element 5 of the ventilation window 1 has possibly been installed or is installable in a stationary manner in connection with the frame 2 or the window element 5 can be installed or is installable to the inner sash and/or to the outer sash, in which case it is possible to open the inner sash and/or the outer sash by tilting or tipping. Moreover, the window element 5 can be installed or is installable in the inner sash and/or in the outer sash, in which case it is possible to open the inner sash and/or the outer sash to the interior S and/or to the exterior U. In this case, it is also possible to implement the opening of the window element 5 by means of a slide hinge or slide fitting to be installed in the upper sash and the lower sash. A glazing bead / external lining 3 is most preferably used in the fastening of a ventilation window 1 which has been installed or is installable in a stationary manner.

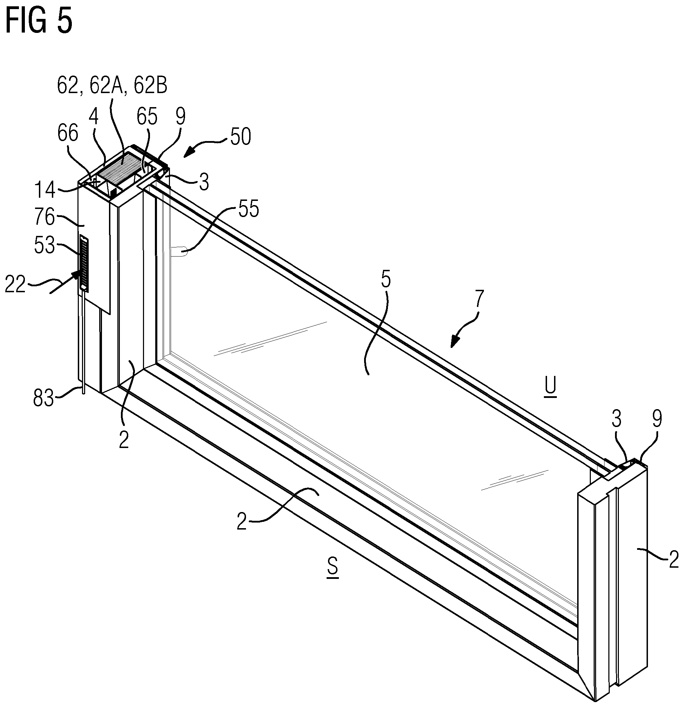

FIG 5 shows a horizontal cross-section V - V of the ventilation window 1 at the ventilation device 50, where the ventilation device 50 equipped with an elongated counterflow heat exchanger 62 has been installed into the frame 2 from the vertical side on the interior S side. The inward side of the installation housing 14 of the ventilation device 1 in the frame 2 is covered with a cover plate 76. The inlet 53 of exhaust air 22 has been installed in the frame 2. A power supply and data cable 83 is taken into the ventilation window 1 most preferably through the inlet 53. On the exterior U side, the gap between the frame 2 and the additional frame 4 is covered by frame lining 9.

The pre-heating duct 65 is located on the side of the light opening area 7 of the ventilation device 50. The pre-heating duct 65 has been arranged in the ventilation device 50 in the vertical frame to the edge on the side of the light opening area 7 so that it runs in the direction of the glass element 5 and in the depth direction of the ventilation window 1 parallel with the glass element 5 or at least partially on the interior S side or at least partially on the exterior U side in relation to the plane defined by the glass element (5). Moreover, the pre-heating duct 65 can run in the direction of the glass element 5 and in the depth direction of the ventilation window 1 at least partially on the interior S side and at least partially on the exterior U side in relation to the plane defined by the glass element 5.

The counter flow heat exchanger 62 has been placed in the ventilation device 50 to the side of the frame 2 and the exterior U. The fresh air duct 62A of the counter flow heat exchanger 62 and the exhaust air duct 62B of the counter flow heat exchanger 62 intersect in the counter flow heat exchanger 62.

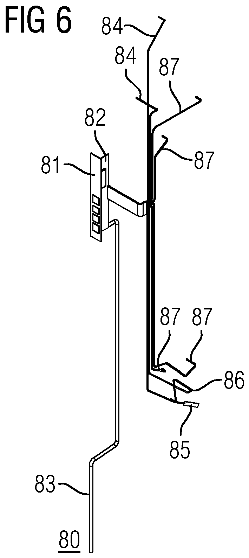

FIG 6 shows a perspective view of an electric system 80 detached from the ventilation device 50. The electric system 80 comprises a user interface/panel 81, circuit board 82, power supply and data cable 83, power cable 84 of the blower, trace heating cable 85, CO₂ sensor cable 86 and temperature sensor cable 87. In addition to this or as an alternative to this, the ventilation device 50 can have other sensors measuring the quality level of air, such as cabling for moisture sensors.

FIG 7 shows the ventilation window 1 viewed from the direction of the fresh air nozzle 51. The nozzle of the inlet 51 of fresh air 20 and the outlet 54 of waste air 23 are on the side which is against the exterior U side of the frame 2. An outlet tube 55 is fastened to the outlet 54 by means of a fastening element 72 such as a screw. The ventilation device 50 is most preferably so symmetrically designed that it is possible to install the ventilation device 50 or so that the ventilation device 50 is installable either to the left or right vertical frame 2 of the ventilation window 50.

FIG 8 shows a horizontal section VIII - VIII of the ventilation window 1 (cf. FIG 7). The suction duct 66 of the ventilation device 50 is located in the ventilation device 50 on the interior S side of the ventilation window 1, and the pre-heating duct 67 is located in the ventilation device 50 on the side of the light opening area 7 of the ventilation window 1.

The counter flow heat exchanger 62 is located most preferably on the side of the frame 2 and the exterior U. The fresh air duct 62A of the counter flow heat exchanger 62 and the exhaust air duct 62B of the counter flow heat exchanger 62 intersect in the counter flow heat exchanger 62.

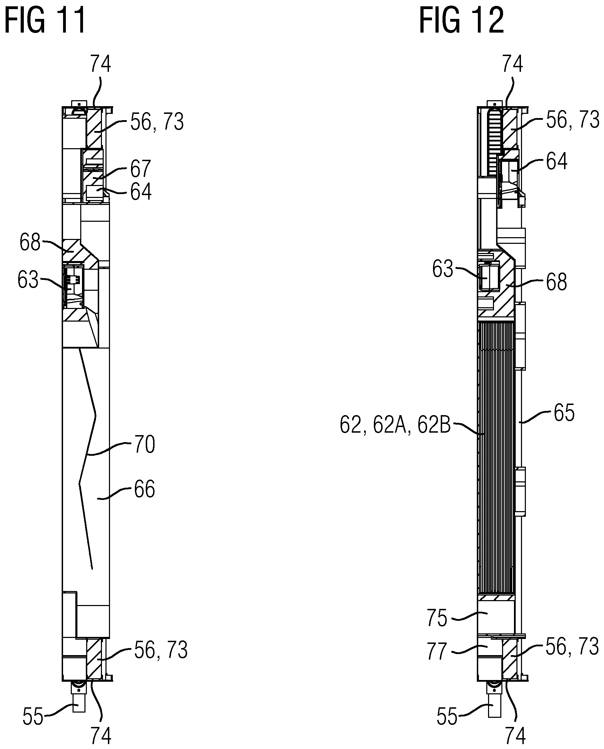

FIG 9 shows a longitudinal cross-section IX - (cf. FIG 7) of the ventilation device 50, and FIG 10 shows a longitudinal cross-section X - X (cf. FIG 7) of the ventilation device 50. FIG 11 shows a longitudinal cross-section XI - XI (cf. FIG 10) of the ventilation device 50, and FIG 12 shows a longitudinal cross-section XII - XII (cf. FIG 10).

Fresh air 20 is sucked into the ventilation device 50 by means of an inlet air blower 64. The inlet air blower 64 has been installed in a sound insulation casing 68. Fresh air 20 travels through a filter 56 to the inlet air blower 64, which blows it along the longitudinal pre-heating duct 65 located under the cover plate 59 to the other end of the ventilation device 50, from where it travels to the fresh air duct 62A of the counter flow heat exchanger 62 and from where inlet air 21 is blown to the interior S through the outlet 52.

Exhaust air 22 is sucked into the ventilation device 50 by means of an exhaust air blower 63. The exhaust air blower 63 has most preferably been installed in a sound insulation casing 68, which can be for example of elastomer or contain elastomer.

Exhaust air 22 travels through the filter 56 to the exhaust air blower 63, which sucks it along the longitudinal exhaust air duct 66 on the interior S side to the other end of the ventilation device 50, from where it travels to the exhaust air duct 62B of the heat exchanger 62, and from where waste air 23 exits to the exterior U through the outlet 54.

The temperature of waste air 23 is lower than the temperature of exhaust air 22 when air cools in the exhaust air duct. Most of the cooling of air is intended to be arranged inside the counter flow heat exchanger 62. When air condensates, it can bind less moisture. Water condensing from the condensing exhaust air 22 inside the counter flow heat exchanger 62, in other words condensation water, exits through the outlet duct 77 to the exterior U, for example through an outlet tube 55.

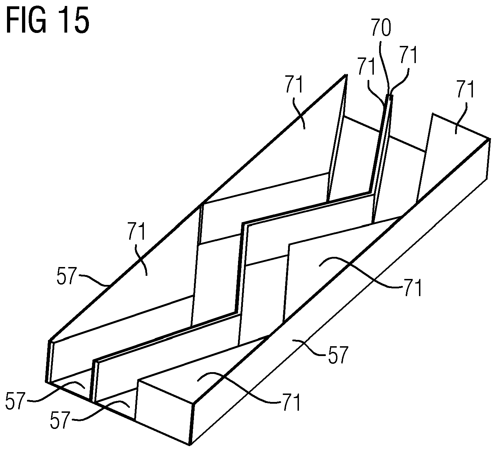

It is possible to preferably use in the pre-heating duct 65 and in the exhaust air duct 66 a sound attenuation arrangement of the kind presented in FIG 15, which arrangement has a guide 70 and attenuation material 71, with which the guide 70 and/or the pre-heating duct 65 are/is at least partially lined. In addition to this or as an alternative to this, the sound attenuation arrangement can comprise an active sound attenuation device.

The fresh air duct 65, 62A of the ventilation window 1 comprises at least two elongated segments, one segment of which comprises a pre-heating duct 65 of fresh air 20 and the segment after this in the flow direction comprises a fresh air duct 62A of the counter flow heat exchanger 62. The pre-heating duct 65 runs from top downwards and the fresh air duct 62A of the counter current heat exchanger 62 runs from below upwards.

The exhaust air duct 66, 62B of the ventilation window 1 comprises at least two elongated segments, one segment of which comprises a suction duct 66 of exhaust air 22 and the segment after this in the flow direction comprises an exhaust air duct 62B of the counter flow heat exchanger 62. The suction duct 66 runs from below upwards and the exhaust air duct 62B of the counter current heat exchanger 62 runs from top downwards. The suction duct 66 is located on the interior S side of the ventilation device 50 and/or on the side of an optional inner sash.

The suction duct 66 is located on the interior S side of the ventilation device 50 and/or on the side of an optional inner sash.

The pre-heating duct 65 and/or the suction duct 66 most preferably contain(s) a sound attenuation arrangement, which comprises a guide 70 and attenuation material 71, with which the guide 70 and/or the pre-heating duct 65 and/or the suction duct 66 are/is at least partially lined. In addition to this or as an alternative to this, the sound attenuation arrangement can comprise an active sound attenuation device.

The blower 63 arranged in connection with the exhaust duct 66 has been placed in the flow direction only after the exhaust duct 66, and the blower 64 influencing the pre-heating duct 65 has been arranged in connection with the pre-heating duct 65 and placed in the flow direction before the pre-heating duct 65. Either one or both of the blowers 63, 64 has/have been placed in at least one sound insulation casing 67, 68, which is most preferably of elastomer or contains elastomer.

The ventilation window 1 comprises at least one filter 56 influencing the fresh air duct 65, 62A and/or at least one filter 56 influencing the exhaust air duct 66, 62B. At least one filter 56 can be detachable through an installation duct 73 extending to the outer surface of the ventilation device 50 or through an installation hatch that can be opened. The end of the installation duct 73 or the installation hatch that can be opened remains behind a cover plate 76 and is accessible after the removal of the cover plate 76. There is a guideway 74 or a guide in the installation duct 73, along which guideway 74 or guide the filter 56 is detachable by pulling, pushing, twisting or turning. At least one filter 56 can be electrostatic.

The ventilation window 1 further comprises in the flow direction to the exhaust air duct 66, 62B an outlet duct 77, which is in a drain connection to the exterior U, after the duct 62B of the counter flow heat exchanger 62 for removing condensation water. The outlet duct 77 comprises an outlet tube 55, and most preferably also a guide 75, such as a trough, inclined guide surfaces and/or a funnel, arranged to guide condensation water from the mouth of the duct 62B of the counter flow heat exchanger 62 to the direction of the internal mouth 55A of the outlet tube 55.

In connection with the outlet duct 77 there is an arrangement for keeping condensation water melted, such as a trace heating cable 85 installed in the outlet tube 55 and possibly also in the guide 75, trough, inclined guide surfaces and/or funnel, which arrangement most preferably is of or contains self-adjusting heating cable, the resistance of which is proportional to the temperature.

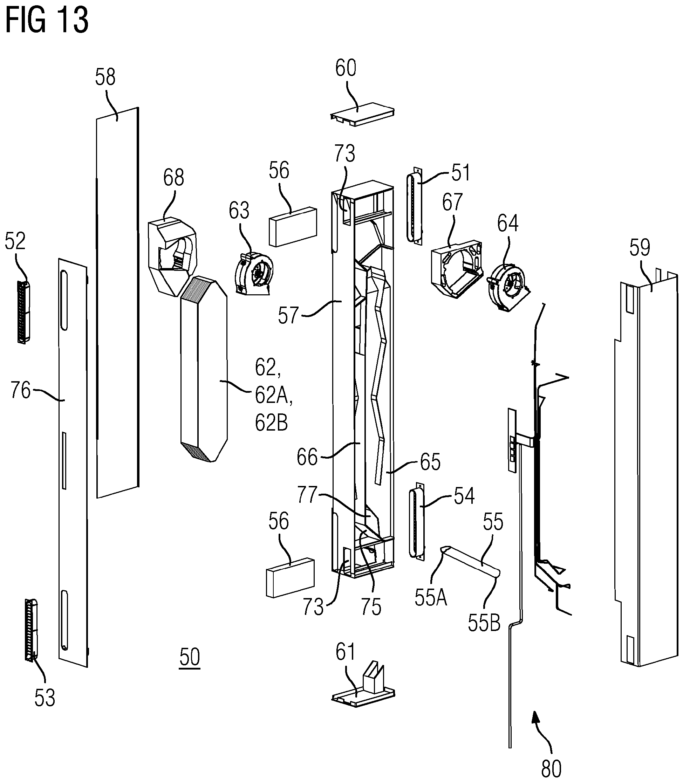

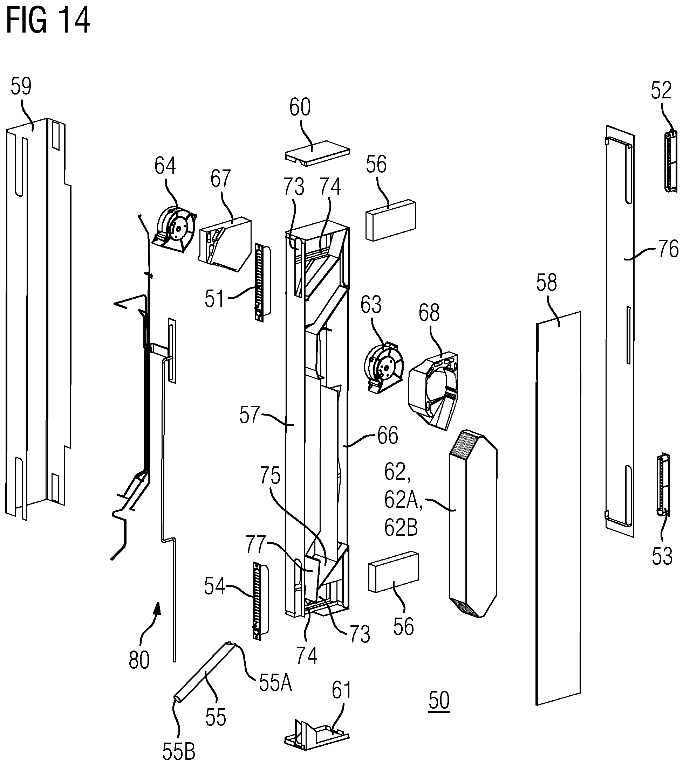

FIG 13 and FIG 14 show exploded figure views of the ventilation device 50 both from the direction of the cover plate (FIG 13) and from the direction of the back plate (FIG 14). The ventilation device 50 comprises a body housing 57, back plate 58, cover plate 59, protective plates 60 and 61, inlet 51 of fresh air duct, outlet 52 of fresh air duct, inlet 53 of exhaust air duct, outlet 54 of exhaust air duct, filters 56 and installation duct 73 of filter 56, guideways 74, outlet duct 77, outlet tube 55, mouth 55A, counter flow heat exchanger 62, exhaust air blower 63, inlet air blower 64, sound insulation casing 67 of inlet air blower 64, sound insulation casing 68 of exhaust air blower 63, corner reduction 69, attenuation material of guide 70, 71, fastening element 72, longitudinal fresh air duct 65, longitudinal exhaust air duct 66 and electric system 80.

### List of reference numbers used:

- U: exterior
- S: interior
- 1: ventilation window
- 2: frame
- 3: glazing bead / external lining
- 4: additional frame
- 5: glass element
- 7: light opening area
- 9: frame lining
- 14: installation housing
- 20: fresh air
- 21: inlet air
- 22: exhaust air
- 23: waste air
- 50: ventilation device
- 51: inlet
- 52: outlet
- 53: inlet
- 54: outlet
- 55: outlet tube
- 55A: mouth
- 55B: mouth
- 56: filter
- 57: body housing
- 58: back plate
- 59: cover plate
- 60: protective plate
- 61: protective plate
- 62: counter flow heat exchanger
- 62A: fresh air duct of counter flow heat exchanger
- 62B: exhaust air duct of counter flow heat exchanger
- 63: exhaust air blower
- 64: inlet air blower
- 65: pre-heating duct
- 66: suction duct
- 67: sound insulation casing
- 68: sound insulation casing
- 70: guide
- 71: attenuation material
- 72: fastening element
- 73: installation duct
- 74: guideway
- 75: guide
- 76: cover plate
- 77: outlet duct
- 80: electric system
- 81: user interface/panel
- 82: circuit board
- 83: power supply and data cable
- 84: power cable of blower
- 85: trace heating cable
- 86: CO₂ sensor cable
- 87: temperature sensor cable

## Claims

1. A ventilation window (1) comprising:
- a frame (2);
- at least one glass element (5) located on the inside of a perimeter formed by the frame (2) so that the glass element (5) or a part of it forms a light opening area (7) ;
- a ventilation device (50) which has been installed in an installation housing (14) inside the frame (2) from the vertical side on the interior (S) side and which is equipped with an elongated heat exchanger (62), comprising
i)at least one blower-operated fresh air duct (65, 62A) for leading fresh air (20) from the exterior (U) to the ventilation device (50) through at least one inlet (51) such as an orifice or nozzle located in the frame (2) on the exterior (U) side and from the ventilation device (50) further to the interior (S) as inlet air (21) through at least one outlet (52) such as an orifice or nozzle located in the frame (2) on the interior (S) side; and
ii) at least one blower-operated exhaust air duct (66, 62B) for leading exhaust air (22) from the interior (S) to the ventilation device (50) through at least one inlet (53) such as an orifice or nozzle located in the frame (2) on the interior (S) side and from the ventilation device (50) further to the exterior (U) as waste air (23) through at least one outlet (54) such as an orifice or nozzle located in the frame (2) on the exterior (U) side;
and where the fresh air duct (65, 62A) runs over the entire distance between the inlet (51) and outlet (52) and the exhaust air duct (66, 62B) runs over the entire distance between the inlet (53) and outlet (54) inside the ventilation device (50) and furthermore so that the fresh air duct (65, 62A) and the exhaust air duct (66, 62B) intersect in the heat exchanger (62);
which ventilation window (1) further comprises in the flow direction to the exhaust air duct (66, 62B) an outlet duct (77), which is in a drain connection to the exterior (U), after the duct (62B) of the heat exchanger (62) for removing condensation water;
the ventilation window (1) is **characterized in that:** the outlet duct (77) comprises an outlet tube (55).

2. A ventilation window (1) according to claim 1, further **comprising:** a guide (75) arranged to guide condensation water from the mouth of the duct (62B) of the heat exchanger (62) to the direction of the internal mouth (55A) of the outlet tube (55) .

3. A ventilation window (1) according to claim 2, **wherein:** the guide (75) comprises a trough, inclined guide surfaces and/or a funnel.

4. A ventilation window (1) according to any one of the preceding claims, **wherein:** in connection with the outlet duct there is an arrangement for keeping condensation water melted.

5. A ventilation window (1) according to claim 4, **wherein:** the arrangement for keeping condensation water melted comprises a trace heating cable (85) installed in the outlet tube (55).

6. A ventilation window (1) according to claim 5, **wherein:** the trace heating cable (85) is also installed in the guide (75), trough, inclined guide surfaces and/or funnel.

7. A ventilation window (1) according to any one of claims 4 to 6, **wherein:** the arrangement for keeping condensation water melted is of or contains self-adjusting heating cable, the resistance of which is proportional to the temperature.

8. A ventilation window (1) according to any one of the preceding claims, which ventilation window (1) **comprises:** an additional frame (4), which is installed to the side of the frame (2) on the side of the ventilation device (50), to the outside of the perimeter formed by the frame (2), and to which the ventilation device (50) embedded in the frame (2) extends.

9. A ventilation window (1) according to any one of the preceding claims, **wherein:** the ventilation device (50) is so symmetrically designed that it is possible to install the ventilation device (50) or so that the ventilation device (50) is installable either to the left or right vertical frame (2) of the ventilation window (50).

10. A ventilation window (1) according to any one of the preceding claims, **wherein:** the heat exchanger (62) of the ventilation device (50) is a counter flow heat exchanger, a cross flow heat exchanger or a heat exchanger with a rotating cell.

## Patentansprüche

1. Lüftungsfenster (1), das folgendes umfasst:
- einen Rahmen (2);
- mindestens ein Glaselement (5) angeordnet an der Innenseite einer Umgrenzung, die vom Rahmen (2) gebildet wird, so dass das Glaselement (5) oder ein Teil davon einen Lichtöffnungsbereich (7) bildet;
- ein Lüftungsvorrichtung (50), die in ein Installationsgehäuse (14) innerhalb des Rahmens (2) von der vertikalen Seite auf der Innenseite (S) installiert worden ist und die mit einem länglichen Wärmetauscher (62), versehen ist, der folgendes umfasst:
i) mindestens einen gebläsebetriebenen Frischluftkanal (65, 62A), um Frischluft (20) von der Außenseite (U) zur Lüftungsvorrichtung (50) durch mindestens einen Einlass (51) wie eine Öffnung oder eine Düse, die im Rahmen (2) an der Außenseite (U) angeordnet ist, und von der Lüftungsvorrichtung (50) weiter zur Innenseite (S) als Einlassluft (21) durch mindestens einen Auslass (52) wie eine Öffnung oder Düse, die im Rahmen (2) an der Innenseite (S) angeordnet ist, zu leiten; und
ii)mindestens einen gebläsebetriebenen Abluftkanal (66, 62B), um Abluft (22) von der Innenseite (S) zur Lüftungsvorrichtung (50) durch mindestens einen Einlass (53) wie eine Öffnung oder eine Düse, die im Rahmen (2) an der Innenseite (S) angeordnet ist, und von der Lüftungsvorrichtung (50) weiter zur Außenseite (U) als Abluft (23) durch mindestens einen Auslass (54) wie eine Öffnung oder Düse, die im Rahmen (2) auf der Außenseite (U) angeordnet ist, zu leiten;
und bei der der Frischluftkanal (65, 62A) über den gesamten Abstand zwischen dem Einlass (51) und dem Auslass (52) verläuft und der Abluftkanal (66, 62B) über den gesamten Abstand zwischen dem Einlass (53) und dem Auslass (54) verläuft innerhalb der Lüftungsvorrichtung (50) verläuft und ferner so, dass sich der Frischluftkanal (65, 62A) und der Abluftkanal (66, 62B) im Wärmetauscher (62) kreuzen;
wobei das Lüftungsfenster (1) in Flussrichtung zum Abluftkanal (66, 62B) ferner einen Auslasskanal (77) umfasst,
der sich in einem Ablassanschluss zur Außenseite (U) hinter dem Kanal (62B) des Wärmetauschers (62) zum Entfernen von Kondenswasser befindet;
das Ventilationsfenster (1) **dadurch gekennzeichnet ist, dass:** der Auslasskanal (77) ein Auslassrohr (55) umfasst.

2. Lüftungsfenster (1) nach Anspruch 1, ferner **umfassend:** eine Führung (75), die zur Führung von Kondenswasser von der Öffnung des Kanals (62B) des Wärmetauschers (62) in die Richtung der internen Öffnung (55A) des Auslassrohrs (55) angeordnet ist.

3. Lüftungsfenster (1) nach Anspruch 2, **in dem:** die Führung (75) einen Trog, gekippte Führungsflächen und/oder einen Trichter umfasst.

4. Lüftungsfenster (1) nach einem der vorhergehenden Ansprüche, **in dem:** es in Verbindung mit dem Auslasskanal eine Anordnung aufweist, um Kondenswasser geschmolzen zu halten.

5. Lüftungsfenster (1) nach Anspruch 4, **in dem:** die Anordnung, mittels der Kondenswasser geschmolzen gehalten wird, ein Begleitheizungskabel (85) umfasst, das im Auslassrohr (55) installiert ist.

6. Lüftungsfenster (1) nach Anspruch 5, **in dem:** das Begleitheizungskabel (85) auch in der Führung (75), dem Trog, den gekippten Führungsflächen und/oder dem Trichter installiert ist.

7. Lüftungsfenster (1) nach einem der vorhergehenden Ansprüche 4 bis 6, **in dem:** die Anordnung, mittels der Kondenswasser geschmolzen gehalten wird, aus einem selbstanpassenden Heizungskabel besteht oder ein solches beinhaltet, dessen Widerstand proportional zur Temperatur ist.

8. Lüftungsfenster (1) nach einem der vorhergehenden Ansprüche, wobei das Lüftungsfenster (1) **umfasst:** einen zusätzlichen Rahmen (4), der installiert ist an der Seite des Rahmens (2) auf der Seite der Lüftungsvorrichtung (50), an der Außenseite der Umgrenzung, die vom Rahmen (2) gebildet ist, und bis zu dem sich die Lüftungsvorrichtung (50) erstreckt, die in den Rahmen (2) integriert ist.

9. Lüftungsfenster (1) nach einem der vorhergehenden Ansprüche, **in dem:** die Lüftungsvorrichtung (50) so symmetrisch gestaltet ist, dass es möglich ist, die Lüftungsvorrichtung (50) zu installieren oder so, dass die Lüftungsvorrichtung (50) entweder am linken oder am rechten vertikalen Rahmen (2) des Lüftungsfensters (50) installierbar ist.

10. Lüftungsfenster (1) nach einem der vorhergehenden Ansprüche, **in dem:** der Wärmetauscher (62) der Lüftungsvorrichtung (50) ein Gegenstromwärmetauscher, ein Kreuzstromwärmetauscher oder ein Wärmetauscher mit einer rotierenden Zelle ist.

## Revendications

1. Fenêtre de ventilation (1) comprenant :
- un cadre (2) ;
- au moins un élément en verre (5) placé à l'intérieur du périmètre formé par le cadre (2) de sorte que ledit élément en verre (5) ou une partie dudit élément forme une ouverture lumineuse (7) ;
- un dispositif de ventilation (50) installé dans un boîtier d'installation (14) placé à l'intérieur du cadre (2) sur le bord vertical du côté intérieur (S) et équipé d'un échangeur de chaleur allongé (62), comprenant :
i) au moins une gaine d'air neuf actionnée par ventilateur (65, 62A) permettant de conduire l'air frais (20) de l'extérieur (U) vers le dispositif de ventilation (50) à travers au moins une entrée (51) telle qu'un orifice ou une buse situé sur le côté extérieur (U) du cadre (2), et du dispositif de ventilation (50) vers l'intérieur (S) sous forme d'entrée d'air (21) à travers au moins une sortie (52) telle qu'un orifice ou une buse situé sur le côté intérieur (S) du cadre (2) ; et
ii)au moins une gaine d'évacuation d'air (66, 62B) permettant de conduire l'air vicié (22) de l'intérieur (S) vers le dispositif de ventilation (50) à travers au moins une entrée (53) telle qu'un orifice ou une buse situé sur le côté intérieur (S) du cadre (2), et du dispositif de ventilation (50) vers l'extérieur (U) sous forme d'air vicié (23) à travers au moins une sortie (54) telle qu'un orifice ou une buse situé sur le côté extérieur (U) du cadre (2) ;
et dans lequel la gaine d'air neuf (65, 62A) s'étend sur l'ensemble de la distance qui sépare l'entrée (51) et la sortie (52), et la gaine d'évacuation d'air (66, 62B) s'étend sur l'ensemble de la distance qui sépare l'entrée (53) et la sortie (54) à l'intérieur du dispositif de ventilation (50), de sorte que la gaine d'air neuf (65, 62A) et la gaine d'évacuation d'air (66, 62B) se croisent à l'intérieur de l'échangeur de chaleur (62) ;
ladite fenêtre de ventilation (1) comprenant également, dans le sens de l'écoulement vers la gaine d'évacuation d'air (66, 62B), une gaine d'évacuation (77) raccordée à l'extérieur (U) par une conduite placée après la gaine (62B) de l'échangeur de chaleur (62) afin d'éliminer l'eau de condensation ;
ladite fenêtre de ventilation est **caractérisée en ce que** : la gaine d'évacuation (77) comprend un tube d'évacuation.

2. Fenêtre de ventilation (1) selon la revendication 1, **comprenant** en outre : un guide (75) disposé de sorte à guider l'eau de condensation de l'entrée de la gaine (62B) de l'échangeur de chaleur (62) vers l'entrée intérieure (55A) du tube d'évacuation (55).

3. Fenêtre de ventilation (1) selon la revendication 2, **dans laquelle** : le guide (75) comprend un creux, des surfaces de guidage inclinées et/ou un entonnoir.

4. Fenêtre de ventilation (1) selon l'une quelconque des revendications précédentes, **dans laquelle** : un dispositif raccordé à la gaine d'évacuation permet de garder l'eau de condensation liquide.

5. Fenêtre de ventilation (1) selon la revendication 4, **dans laquelle** : le dispositif permettant de garder l'eau de condensation liquide comprend un câble de traçage thermique (85) placé dans le tube d'évacuation (55).

6. Fenêtre de ventilation (1) selon la revendication 5, **dans laquelle** : le câble de traçage thermique (85) est également disposé dans le guide (75), le creux, les surfaces de guidage inclinées et/ou l'entonnoir.

7. Fenêtre de ventilation (1) selon l'une quelconque des revendications 4 à 6, **dans laquelle** : le dispositif permettant de garder l'eau de condensation liquide est formé de ou contient un câble chauffant autorégulant, dont la résistance est proportionnelle à la température.

8. Fenêtre de ventilation (1) selon l'une quelconque des revendications précédentes, **comprenant** : un cadre supplémentaire (4) installé sur le côté du cadre (2) où se trouve le dispositif de ventilation (50), sur le côté extérieur du périmètre formé par le cadre (2) et vers lequel s'étend le dispositif de ventilation (50) encastré dans le cadre (2).

9. Fenêtre de ventilation (1) selon l'une quelconque des revendications précédentes, **dans laquelle** : le dispositif de ventilation (50) est de conception symétrique de sorte à pouvoir être monté soit à gauche, soit à droite du cadre vertical (2) de la fenêtre de ventilation (50).

10. Fenêtre de ventilation (1) selon l'une quelconque des revendications précédentes, **dans laquelle** : l'échangeur de chaleur (62) du dispositif de ventilation (50) est un échangeur à contre-courant, un échangeur à courants croisés ou un échangeur rotatif.
